# EUROPEAN PATENT SPECIFICATION

(11) **EP 4 422 274 B1**
(45) Date of publication and mention of the grant of the patent: **09.12.2026**
(21) Application number: 22909420.6
(22) Date of filing: 27.09.2022
(51) Int. Cl.: H04W 36/00, H04L 61/103, H04L 69/085

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 24.12.2021 CN 202111599951
(43) Date of publication of application: 28.08.2024
(73) Proprietor: Huawei Technologies Co., Ltd., Shenzhen, Guangdong 518129 (CN)
(72) Inventor: LI, Hancheng, Shenzhen, Guangdong 518129 (CN); HU, Weihua, Shenzhen, Guangdong 518129 (CN)
(74) Representative: Gill Jennings & Every LLP
(86) International application number: PCT/CN2022/121649
(87) International publication number: WO 2023/116102

(56) References cited:
- WO-A1-2019/137551
- CN-A- 101 399 838
- CN-A- 108 353 023
- CN-A- 110 636 151
- CN-A- 113 472 651
- DE-A1- 10 233 187
- MINISTÈRE DE L'ÉCONOMIE ET DES FINANCES (FRANCE): "Li of NIDD", vol. SA WG3, no. e-meeting; 20210125 - 20210129, 18 January 2021 (2021-01-18), XP052181283, Retrieved from the Internet <URL:https://ftp.3gpp.org/tsg_sa/WG3_Security/TSGS3_LI/2021_80e-a/Docs/s3i210012.zip s3i210012.doc> [retrieved on 20210118]
- DEGERMARK LULEA UNIVERSITY OF TECHNOLOGY/SICS B NORDGREN S PINK LULEA UNIVERSITY OF TECHNOLOGY/SICS LULEA UNIVERSITY OF TECHNOLOGY: "IP Header Compression ; rfc2507.txt", IP HEADER COMPRESSION ; RFC2507.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 February 1999 (1999-02-01), XP015008290
- HUAWEI ET AL: "IP Address allocation", vol. SA WG2, no. Kochi, India; 20190121 - 20190125, 15 January 2019 (2019-01-15), XP051590127, Retrieved from the Internet <URL:http://www.3gpp.org/ftp/tsg%5Fsa/WG2%5FArch/TSGS2%5F130%5FKochi/Docs/S2%2D1900451%2Ezip> [retrieved on 20190115]
- MOTOROLA SOLUTIONS: "Overview of MCData IP connectivity service component", 3GPP DRAFT; S6-161448 WAS 161385 OVERVIEW OF IP CONNECTIVITY SERVICE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG6, no. Reno, Nevada, USA; 20161114 - 20161118, 13 November 2016 (2016-11-13), Mobile Competence Centre ; 650, route des Lucioles ; F-06921 Sophia-Antipolis Cedex ; France , XP051186778

## Description

### TECHNICAL FIELD

Embodiments of this application relate to the field of communication technologies, and in particular, to a communication method and apparatus.

### BACKGROUND

To address challenges of wireless broadband technologies and maintain a leading edge of a 3rd generation partnership project (3rd generation partnership project, 3GPP) network, the 3GPP standard group formulated a 5th generation (5th generation, 5G) network architecture at the end of 2016. The architecture supports access to a core network in a wireless technology (for example, long term evolution (long term evolution, LTE) or a 5G radio access network (radio access network, RAN)) defined by the 3GPP standard group, in a fixed network access manner, or the like.

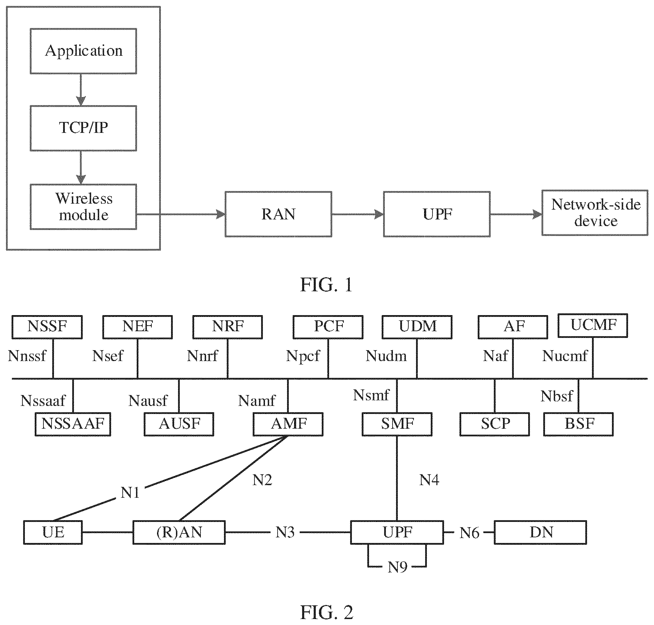

During communication, a terminal device may usually access a network through an interface provided by a transmission control protocol/internet protocol (transmission control protocol/internet protocol, TCP/IP) stack. When the terminal device is a wireless network terminal, an application in the terminal invokes an interface provided by a protocol stack (for example, a TCP/IP stack in FIG. 1), so that a packet is exchanged between the protocol stack and a network-side device (for example, a device deployed at a user plane function (user plane function, UPF) remote end, which is not shown in FIG. 1). A packet of the protocol stack on the terminal device may be sent through a wireless module (user equipment (user equipment, UE) in FIG. 1), or may be received through the wireless module. A packet sent by the terminal may be sent to the network-side device through the UPF, or a packet from the network-side device may be received through the UPF. In other words, when the terminal communicates with the network-side, the terminal needs to carry a protocol stack to implement the communication, but deployment of a protocol stack mechanism is complex.

3GPP DRAFT; S3120012, 3GPP TSG-SA3LI Meeting #80-LI-e-a; vol. SA WG3, no. e-meeting; 2021-025 - 20210129 18 January 2021, discusses a new LI architecture to cover Non-IP Data Delivery case in 5GS and associated xIRIs/CC for TS 23.127 and TS 33.128.

### SUMMARY

This application provides a communication method and apparatus, to reduce communication complexity. The invention is defined by the appended claims.

### BRIEF DESCRIPTION OF DRAWINGS

FIG. 1 is a schematic architectural diagram of a protocol stack deployed in a terminal device;
FIG. 2 is a diagram of a mobile communication network architecture according to an embodiment of this application;
FIG. 3A is a diagram of a structure of a protocol stack;
FIG. 3B is a diagram of a structure of another protocol stack;
FIG. 4 is a diagram of a communication connection procedure;
FIG. 5 is a schematic flowchart of a communication method according to an embodiment of this application;
FIG. 6 is a schematic flowchart of a communication method according to an embodiment of this application;
FIG. 7 is a schematic flowchart of a communication method according to an embodiment of this application;
FIG. 8 is a schematic flowchart of a communication method according to an embodiment of this application;
FIG. 9 is a schematic flowchart of a communication method according to an embodiment of this application;
FIG. 10 is a schematic flowchart of a communication method according to an embodiment of this application;
FIG. 11A is a schematic flowchart of a communication method according to an embodiment of this application;
FIG. 11B is a schematic flowchart of a communication method according to an embodiment of this application;
FIG. 12 is a schematic flowchart of a communication method according to an embodiment of this application;
FIG. 13 is a diagram of a structure of a communication apparatus according to an embodiment of this application;
FIG. 14 is a diagram of a structure of a communication apparatus according to an embodiment of this application; and
FIG. 15 is a diagram of a structure of a communication apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two. Therefore, for implementations of the apparatus and the method, reference may be made to each other, and repeated parts are not described again.

FIG. 2 is an example of a diagram of a mobile communication network architecture. The network architecture includes a terminal device, an access network device, an access and mobility management function, a session management function, a user plane function, a policy control function, a network slice selection function, a network slice-specific identity authentication and authorization function, a network repository function, a network data analysis function, a unified data management function, a unified data repository function, an authentication service function, a network capability exposure function, a terminal radio capability management function, a binding support function, an application function, and a data network (data network, DN) connected to an operator network. The terminal device may access a wireless network through an access node at a current location. The terminal device may send service data to a data network through the access network device and the user plane function, and receive service data from the data network.

The access and mobility management function is mainly used for attachment, mobility management, tracking area update procedures, and the like of a terminal device in a mobile network. In a 5G communication system, the access and mobility management function may be an access and mobility management function (access and mobility management function, AMF). In a future communication system (for example, a 6G communication system), the access and mobility management function may still be an AMF, or may have another name. This is not limited in this application.

The session management function is used to manage sessions on mobile networks, such as session establishment, modification, and release. A specific function is, for example, allocating an internet protocol address to the terminal device, and selecting a user plane function that provides a packet forwarding function. In the 5G communication system, the session management function may be a session management function (session management function, SMF). In a future communication system (for example, the 6G communication system), the session management function may still be an SMF, or may have another name. This is not limited in this application.

The user plane function is mainly used to process a user packet, such as forwarding and charging. In the 5G communication system, the user plane function may be a UPF. In a future communication system (for example, the 6G communication system), the user plane function may still be a UPF, or may have another name. This is not limited in this application.

The policy control function includes policy control, charging policy control, QoS control, and the like. In the 5G communication system, the policy control function may be a policy control function (policy control function, PCF). In a future communication system (for example, the 6G communication system), the policy control function may still be a PCF, or may have another name. This is not limited in this application.

The network slice selection function is mainly used to select a proper network slice for a service of a terminal device. In the 5G communication system, the network slice selection function may be a network slice selection function (network slice selection function, NSSF). In a future communication system (for example, the 6G communication system), the network slice selection function may still be an NSSF, or may have another name. This is not limited in this application.

The network slice-specific identity authentication and authorization function (network slice-specific authentication and authorization function, NSSAAF) is mainly used to perform authentication and authorization for a terminal device to access a specific network slice.

The network repository function is mainly used to provide registration and discovery of a network function or a service provided by a network function. In the 5G communication system, the network repository function may be a network repository function (network repository function, NRF). In a future communication system (for example, the 6G communication system), the network repository function may still be an NRF, or may have another name. This is not limited in this application.

The network data analysis function collects data from various network functions, such as the policy control function, the session management function, the user plane function, an access management function, and the application function (through a network capability exposure function), and performs analysis and prediction. In the 5G communication system, the network data analysis function may be a network data analysis function (network data analytics function, NWDAF). In a future communication system (for example, the 6G communication system), the network data analysis function may still be an NWDAF, or may have another name. This is not limited in this application.

The unified data management function is used to manage subscription information of a terminal device. In the 5G communication system, the unified data management function may be a unified data management (unified data management, UDM) function. In a future communication system (for example, the 6G communication system), the unified data management function may still be a UDM function, or may have another name. This is not limited in this application.

The unified data repository function is used to store structured data, including subscription information, policy information, and network data or service data defined in standard formats. In the 5G communication system, the unified data repository function may be a unified data repository (unified data repository, UDR) function. In a future communication system (for example, the 6G communication system), the unified data repository function may still be a UDR function, or may have another name. This is not limited in this application.

The authentication service function is used to perform security authentication on a terminal device. In the 5G communication system, the authentication service function may be an authentication server function (authentication server function, AUSF). In a future communication system (for example, the 6G communication system), the authentication service function may still be an AUSF, or may have another name. This is not limited in this application.

The network capability exposure function can expose some functions of a network to an application in a controlled manner. In the 5G communication system, the network capability exposure function may be a NEF. In a future communication system (for example, the 6G communication system), the network capability exposure function may still be a NEF, or may have another name. This is not limited in this application.

The terminal radio capability management function is used to store and manage a wireless capability of a terminal device in a network. In the 5G communication system, the terminal radio capability management function may be a UE radio capability management function (UE radio capability management function, UCMF). In a future communication system (for example, the 6G communication system), the terminal radio capability management function may still be a UCMF, or may have another name. This is not limited in this application.

The binding support function is used to maintain a correspondence between an internet protocol (internet protocol, IP) address and a service function. In the 5G communication system, the binding support function may be a binding support function (binding support function, BSF). In a future communication system (for example, the 6G communication system), the binding support function may still be a BSF, or may have another name. This is not limited in this application.

The application function may provide service data of various applications for a control plane function of a communication network of an operator, or obtain data information and control information of a network from a control plane function of a communication network. In the 5G communication system, the application function may be an application function (application function, AF). In a future communication system (for example, the 6G communication system), the application function may still be an AF, or may have another name. This is not limited in this application.

The data network is mainly configured to provide a data transmission service for a terminal device. The data network may be a private network, for example, a local area network, or a public data network (public data network, PDN), for example, the Internet (Internet), or a dedicated network deployed by an operator in a combined manner, for example, a configured IP multimedia network subsystem (IP multimedia network subsystem, IMS) service.

It should be noted that the function in embodiments of this application may also be referred to as a network element, a network function, a function entity, a device, or the like. For example, the access and mobility management function may also be referred to as an access and mobility management network element, an access and mobility management network function, an access and mobility management function entity, or the like. Names of the functions are not limited in this application. A person skilled in the art may replace the names of the functions with other names to perform the same functions, and this falls within the protection scope of this application.

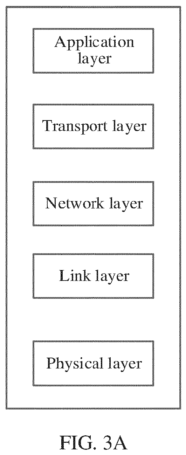

As shown in the background, when a terminal device communicates with a network device, a protocol stack usually needs to be deployed. Usually, the protocol stack may include a link layer, a network layer, a transport layer, and an application layer. FIG. 3A is used as an example. FIG. 3A further includes a physical layer. However, the physical layer is usually not included in layering of the protocol stack. The application layer may implement the following functions.
1. Support HTTP: provides a request and transmission of a world wide web (world wide web, Web) file.
2. Support file transfer protocol (file transfer protocol, FTP): provides file transfer between two systems.
3. Support domain name server (domain name server, DNS): converts a website (a uniform resource system (uniform resource locator, URL)) into a 32-bit network address.

The transport layer may implement the following functions.
1. Support transmission control protocol (transmission control protocol, TCP): provides connection-oriented services for an application. The services include transmission and flow control (that is, rate matching between a sender and a receiver) of an application-layer packet to a destination, classification of long packets into short packets, and congestion control to suppress a transmission rate of a source.
2. Support user datagram protocol (user datagram protocol, UDP): provides a connectionless service for an application without reliability, traffic control, and congestion control.

The network layer (IP layer) may implement the following functions.
1. Support IP: defines fields in a data packet and how an end system and a router function on these fields.
2. Support a plurality of routing protocols: enables a data packet to be transmitted from a source to a destination based on a route.

The link layer may implement the following functions.
1. Data of a network layer is transmitted to a next node through the link layer, and the next node transmits the data from the link layer to the network layer.
2. A link layer protocol includes, for example, a point-to-point protocol (point-to-point protocol, PPP), and may provide reliable delivery that is different from TCP reliable delivery.

The physical layer may provide a protocol and a transmission medium for bit flow transmission. Different transmission media have different physical layer protocols.

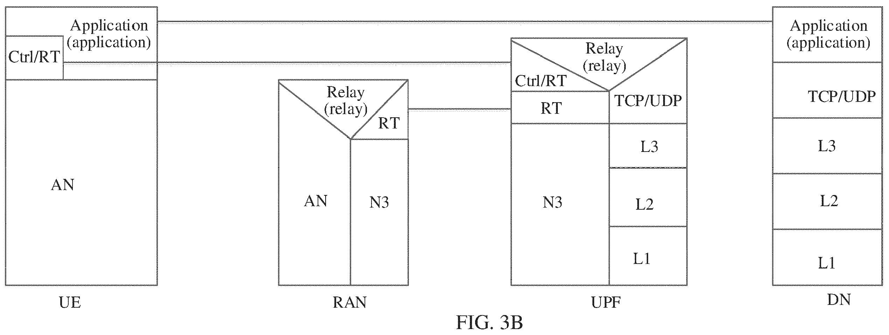

FIG. 3B is a diagram of another protocol stack. An access network (access network, AN) layer is a wireless protocol stack between UE and an access network RAN (which is not limited and described in this application). Ctrl/RT is an optional protocol layer, and provides control (control, Ctrl) (whose name used in this application is not limited) between the UE and a UPF and/or reliable transmission (reliable transmission, RT) (whose name used in this application is not limited). An application protocol layer is an application layer between the UE and a DN-side device. The RAN optionally provides an RT layer between the RAN and the UPF to provide reliable transmission. The UPF is on a wireless network-side, optionally provides an RT protocol layer between the UPF and the RAN, and optionally provides a Ctrl/RT layer between the UPF and the UE. The UPF provides a connection service of a network-side on the network-side, for example, a TCP/UDP (user datagram protocol, user datagram protocol) in FIG. 3B (a network type, a connection type, and a specific protocol used in a DN are not limited in this application). When receiving an application or a Ctrl layer message from the UE, the UPF establishes a connection in the DN, to provide data sending and receiving a service for the UE. Reliable transmission of data and the Ctrl layer message between the UPF and the UE may be optionally implemented through the RT protocol layer (including two optional manners: the RT protocol layer is used between the UE and the UPF; and reliable transmission is implemented between the RAN and the UE through an air interface mechanism, in other words, reliable transmission between the RAN and the UPF is implemented through the RT to implement reliable transmission between the UE and the UPF). In the diagram of the protocol stack shown in FIG. 3B, no TCP/IP protocol stack is deployed in a terminal, the terminal may directly transmit an application packet or application data to the UPF, and a TCP/UDP protocol stack is deployed in the UPF to establish a communication connection to a data network to transmit data.

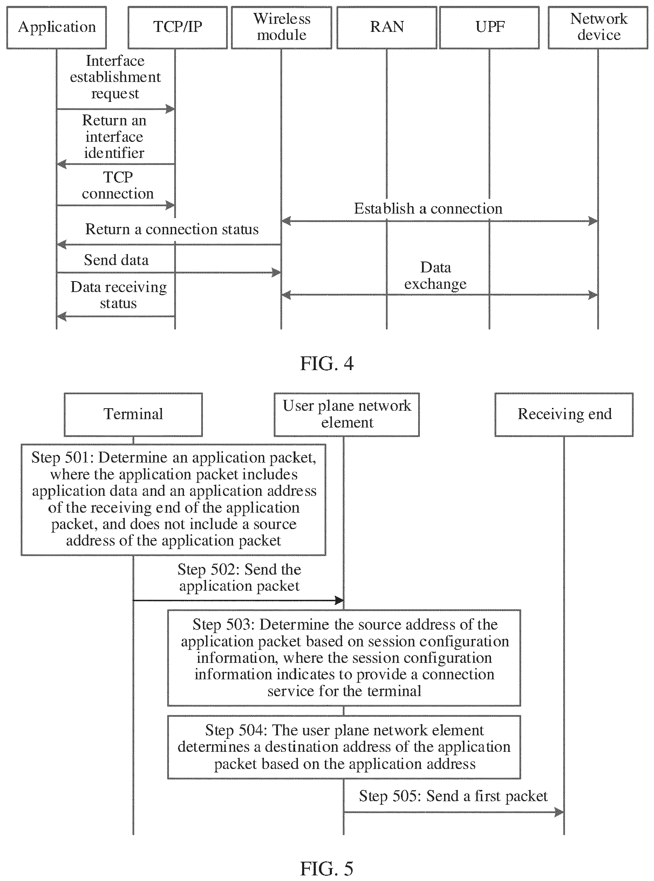

In a case in which a system architecture shown in FIG. 1 and protocol stack layering shown in FIG. 3A are used, when a terminal device establishes a communication connection to a network device, reference may be made to a procedure shown in FIG. 4. An application of a terminal sends a request for invoking an interface of a TCP/IP protocol stack, a layer to which a TCP/IP belongs returns an interface identifier to the application, and UE establishes a TCP connection to the network device through a wireless module of the UE (transmitting application data through the TCP connection between a RAN and a UPF), and receives a connection status (details of whether a connection can be established) returned by the network device. If the network device supports establishment of the TCP connection to the terminal, the application in the UE may transmit data to the network device based on the established TCP connection through the wireless module. After receiving the data, the network device feeds back a data receiving status (including whether the data is successfully received, a quantity of data that is successfully received, a quantity of data that is not successfully received, and the like).

Because application data transmission between the terminal and the network device usually needs to be implemented through the TCP protocol stack, a TCP or IP protocol stack needs to be deployed in each terminal. In other words, the terminal needs to support TCP or IP protocol transmission. However, deployment of the TCP or IP protocol stack brings processing overheads to the terminal device, and the terminal device is required to provide a processing capability that supports the TCP or IP protocol.

In consideration of high complexity of deploying the TCP or IP protocol stack in the terminal during the application data transmission, this application provides a communication method, to improve processing efficiency of transmitting application data of an application by the terminal to the network device, and reduce a requirement on a processing capability of transmitting the application data by the terminal device.

FIG. 5 is a procedure of a communication method according to an embodiment of this application. The method may be performed through interaction between a terminal, a user plane network element, and a receiving end. The receiving end may be a network device, a core network device, a data center, or the like. This is not specifically limited in this application. In this application, communication between the terminal and the receiving end is implemented through the user plane network element. A TCP or an IP protocol stack does not need to be deployed in the terminal, and the terminal only needs to use a wireless communication protocol to send an application packet or application data to the receiving end. The user plane network element may act as a client to establish a TCP or IP communication connection to the receiving end. When the receiving end sends data to the terminal, the user plane network element may act as a service end to directly send application packet or application data to the terminal through the wireless communication protocol. This may be specifically performed according to the following steps.

Step 501: The terminal determines an application packet, where the application packet includes application data and an application address of the receiving end of the application packet, and does not include a source address of the application packet. The application packet may be carried in a session or a flow. In other words, the application packet may be transmitted through the session or the flow. Usually, the session includes a plurality of flows, and the flow may be a QoS flow or may be another data flow. This is not specifically limited in this application.

Step 502: The terminal sends the application packet to the user plane network element. Correspondingly, the user plane network element may receive the application packet from the terminal.

Step 503: The user plane network element determines the source address of the application packet based on session configuration information, where the session configuration information indicates to provide a connection service for the terminal.

It should be noted that the session configuration information may be information configured by the user plane network element, or may be information from a session management network element, or may be information from a core network device, or may be determined by parsing the application packet after the user plane network element receives the application packet from the terminal device. A source of the session configuration information is not specifically limited herein in this application. In this manner, a manner of obtaining the session configuration information can be more flexible and may be adjusted in real time. Because the user plane network element communicates with the receiving end equivalently as a substitute of the terminal device, the user plane network element needs to learn of an address of the receiving end and determine an address of the substituted terminal device during communication, to establish a TCP or IP connection to the receiving end. In this case, the source address of the application packet may be determined based on the session configuration information.

In an optional manner, the user plane network element may determine a source address of the session based on the session configuration information; and the user plane network element may use the source address of the session as the source address of the application packet. After receiving the application packet, the user plane network element determines the session or the flow that carries the application packet. The source address of the session is determined based on the session or the flow that carries the application packet and the session configuration information. The source address of the session is used as the source address of the application packet. For example, the session configuration information includes source address information of a PDU session 1. If the application packet is carried through the PDU session 1 or a QoS flow of the session 1, a source address of the PDU session 1 may be used as the source address of the application packet. Certainly, in actual application, source address information of a QoS flow of a specific PDU session may be directly configured in the session configuration information, so that the source address information of the QoS flow may be directly used as the source address of the application packet. This is not specifically limited in this application.

However, in actual application, the user plane network element may also allocate a source address to the terminal, and does not need to learn of an actual address of the terminal device. For example, a terminal 1 corresponds to an address 1, and sending data to the address 1 is sending data to the terminal 1. Therefore, in actual application, the address of the terminal device may be set based on performance of the user plane network element or an actual service requirement, and may be an address of the user plane network element, the actual address of the terminal device, the address allocated by the user plane network element to the terminal device, address information including both the address of the user plane network element and the actual address of the terminal device, or the like. This is not specifically limited in this application. In a conventional technology, when a protocol stack for application packet transmission is deployed in the terminal, a source address and a destination address of an application packet, for example, a source IP address and a destination IP address of the application packet, need to be carried when a packet is sent. However, in this application, when the protocol stack for application packet transmission is not deployed in the terminal, in a case in which the terminal device does not transmit the source address of the application packet to the user plane network element, the user plane network element may determine the source address of the application packet based on the session configuration information. In this manner, processing complexity of transmitting the application data of the application by the terminal device can be reduced.

It should be noted that the session configuration information may further include packet protocol information; and the packet protocol information is: packet protocol information for transmitting the application packet, and/or a packet protocol type corresponding to the application packet. The packet protocol information may be an HTTP protocol, or the like. This is not specifically limited herein in this application.

Step 504: The user plane network element determines the destination address of the application packet based on the application address. Because the application packet carries the application address of the receiving end of the application packet rather than an IP address, the user plane network element may determine the destination address of the application packet based on the application address. For example, the application address of the application packet is an application address 1, and the user plane network element may store a correspondence between the application address and the destination address of the application packet. For example, if the application address 1 corresponds to a destination address 3, the user plane network element may use the destination address 3 as the address of the receiving end of the application packet.

In an optional implementation, the user plane network element may send a connection establishment request, where the establishment request includes the application address, and the establishment request is used to request the destination address corresponding to the application address. The user plane network element receives response information of the connection establishment request, where the response information may include the destination address corresponding to the application address. It should be noted that the user plane network element determines, by using the connection establishment request instead of directly using the application packet to carry the destination address, the destination address corresponding to the application address of the application packet. In this way, in this application, the terminal device may send the application packet to a UPF through a wireless communication protocol-based session or flow when no transmission protocol stack of the application packet is deployed, and the UPF may also obtain the destination address of the application packet.

Step 505: The user plane network element sends a first packet to the receiving end, where the first packet includes the application data, the source address of the application packet, and the destination address of the application packet.

After determining the source address and the destination address of the application packet, the user plane network element packs the source address and the destination address of the application packet and the application data into the first packet and transmits the first packet to the receiving end. When the terminal communicates with the receiving end, the protocol stack for application packet transmission does not need to be deployed in the terminal. When the terminal sends the packet to the user plane network element, application packet transmission protocol-based connection information, such as source address information or destination address information, does not need to be carried. The user plane network element may establish, to the receiving end through the session configuration information and the application address of the receiving end of the application packet, a communication connection used to transmit the application packet, for example, a TCP connection or an IP connection. In this manner, complexity of data processing when the UE transmits the application packet to a network-side device can be reduced.

It should be noted that, in this embodiment of this application, the application packet may be directly transmitted between the user plane network element and the terminal based on the session or the flow of the wireless communication protocol, and the terminal does not need to have the TCP or IP protocol stack to establish the TCP connection or the IP connection to the network-side device to transmit the application packet. The network-side device and the receiving end (for example, a server corresponding to an application program) may send the application packet through the TCP or IP protocol stack. In addition to transmitting the application packet between the network-side device and the receiving end through the TCP or IP protocol stack, the application packet may also be transmitted through an HTTP protocol, an FTP protocol, or the like. In this way, in this application, the terminal device can transmit the application packet when the protocol stack for application packet transmission is not deployed, so that an application packet transmission process can be simplified.

In addition, the session configuration information may further include a service type (like a connection service or an addressing service) that can be provided by the user plane network element, a packet protocol or a service type (like IPv4/IPv6/ICN and MEC) that can be supported by the receiving end, and the like. This is not specifically limited in this application, and may be flexibly selected based on a service requirement of a user and a device capability of the user plane network element.

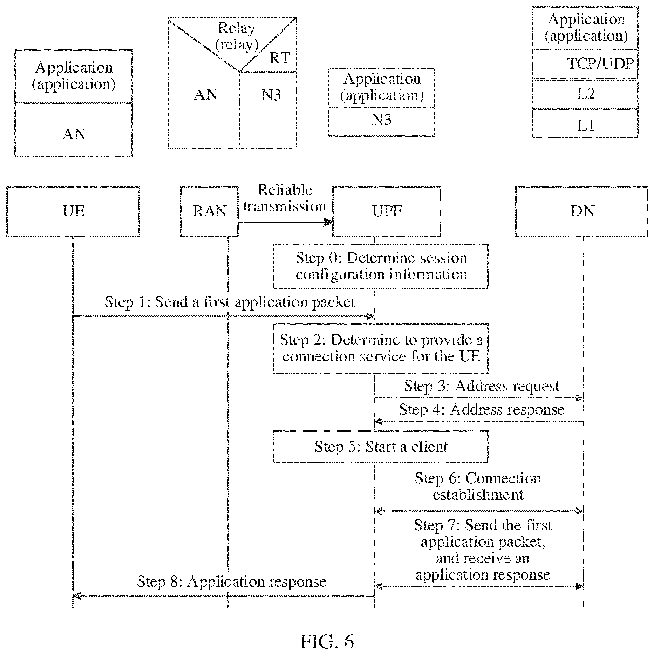

When a user plane network element acts as a client (that is, sends data in a communication connection), a UPF, an external device, and UE are used as examples for description. In this embodiment of this application, the external device includes an address server (for example, a DNS server), and further includes a device used as a service end or a receiving end. The service end or receiving end device may be deployed in a DN. In FIG. 6, an example in which the service end or receiving end device is deployed in the DN is used for description. For example, a terminal-side application layer uses an HTTP protocol. A terminal-side application directly sends a packet through a wireless protocol layer, and does not need to transmit an application packet at a protocol layer like Ctrl. For the following descriptions of the DN, refer to descriptions herein for understanding. Data sending between the UE and the UPF is implemented through a RAN, and reliable transmission of data between the RAN and the UPF is ensured through GTP-U. Details are not described herein. For understanding, refer to the following descriptions. The following may be performed.

Step 0: The UPF determines session configuration information, where the session configuration information includes connection information required for a session or a flow sent by a terminal device. A source of the session configuration information is the same as a source of the foregoing session configuration information, and the session configuration information may be configured or from another device, or may be default information (for example, an application layer protocol of the session/flow is an HTTP protocol by default), DNN/S-NSSAI (for example, a specific application layer and/or a network protocol is used in a network corresponding to the DNN/S-NSSAI), or the like. The connection information is determined based on the foregoing information. This is not specifically limited in this application.

Step 1: The UE sends a first application packet to the UPF, where the packet is a packet (for example, an HTTP packet) complying with a specific application layer protocol, and may include related information for defining the application layer protocol (for example, the HTTP packet includes URL information). The UE may send the first application packet through a session of a non-ip (non-IP) type, or through a session of a new type. If the session is of the new type, the session type is a session that supports a network in providing a connection service. It is assumed that the first application packet is sent through the session. However, in actual application, the first application packet may alternatively be sent through a flow. This is not specifically limited herein in this application, and the session is used merely as an example herein.

Step 2: The UPF determines to provide a connection service for the UE. For example, the UPF determines, based on the information in step 0, to provide the connection service, or the UPF determines, based on the session type, the DNN/S-NSSAI, or the like, to provide the connection service. The UPF may determine, based on the information in step 0, the connection information required for providing the connection service, parse the first application packet from step 1, and determine a type of the application layer protocol, application layer address (that is, an application address) information, and the like.

Step 3: The UPF may determine address information of the UE, to request an address of the receiving end (for example, send a request to the DN), to request to obtain the address (for example, an IPv4 address) of the receiving end corresponding to the first application packet. The receiving end may be understood as a service end or receiving end device. For the following descriptions of the receiving end, refer to descriptions herein for understanding.

Step 4: The UPF receives an address response of the receiving end from the DN, to obtain the address of the receiving end corresponding to the first application packet.

If the UPF locally records the address of the receiving end corresponding to the first application packet, steps 3 and 4 do not need to be performed.

Step 5: The UPF starts an application client to establish a TCP/IP connection to the receiving end device.

Step 6: Establish a TCP/IP connection corresponding to the application packet between the UPF and the receiving end device. The UPF may use an address (for example, an IPv4 address) of the UPF to establish the TCP/IP connection to the receiving end device, or may use an address of the UE (an address allocated by the UPF or a control plane network element to the UE in a session establishment process) to establish the TCP/IP connection to the receiving end device.

Step 7: The UPF sends the first application packet received in step 1 to the receiving end device through the established TCP/IP connection, and then receives an application response from the receiving end device through the TCP/IP connection, where the application response is a response packet of the receiving end device for the received first application packet.

Alternatively, for a protocol type (for example, a UDP) through which a connection does not need to be re-established, or in the case of a reliable transmission connection between the UPF and the receiving end device that always exists, the UPF may not perform step 6, but directly send the application request to the receiving end device, and then the UPF receives the response from the receiving end device.

Step 8: The UPF sends the application response to the UE.

It should be noted that, in scenarios such as an ICN network and co-deployment of the UPF and an application service, the UPF directly obtains, through an ICN definition or internal communication, content requested by the UE, and steps 3 to 7 may not be performed (for the ICN network, the UPF reads or requests corresponding content based on a name of the content in the ICN request, and does not necessarily need to establish a connection). In scenarios such as co-deployment of the UPF and an application, the UPF may directly obtain related content on the co-deployed application based on information such as an identifier in an application layer request, and does not need to obtain information through a connection. Alternatively, the UPF requests, based on an application layer address requested by the UE, to obtain the content requested by the UE (the UPF and the application may access each other through the application layer address, and the foregoing ICN and co-deployment manner may be considered as a specific implementation). Alternatively, for a protocol type for which connection establishment does not needs to be displayed (for example, for UDP, when the UE needs to send a packet, the UE directly sends the packet to an address and a port of a peer end, and does not need to complete a handshake process of a connection in advance like TCP), a process of connection establishment in step 6 does not need to be performed, and a request is directly sent to the receiving end device and the response is further received from the receiving end device. A similar process in which the UPF obtains the content requested by the UE is also considered as a connection service in this application.

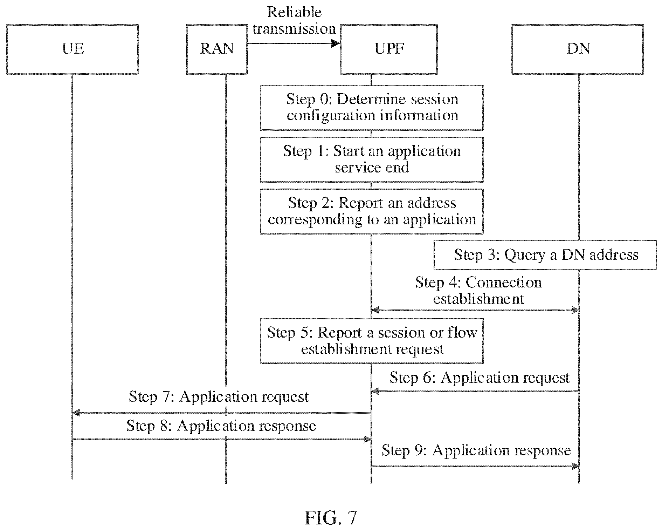

When a user plane network element acts as a service end (that is, receives data in a communication connection), a UPF, an external device, and UE are used as an example for description. Data sending between the UE and the UPF is implemented through a RAN, and reliable transmission of data between the RAN and the UPF is ensured through GTP-U. Details are not described herein. For understanding, refer to the following descriptions. The external device includes an application client. In FIG. 7, an example in which the external device is deployed in a DN is used for description. The following may be performed.

Step 0: The UPF determines session configuration information. This is the same as step 0 in FIG. 6. Details are not described herein again.

Step 1: The UPF determines to start an application service end based on the session configuration information in step 0, and optionally establishes a monitoring interface corresponding to a terminal/a session/a flow/an application. Similar to descriptions corresponding to FIG. 6, when the external device needs to send a packet to the UPF, the external device does not need to display a connection establishment process, but directly sends a request. Correspondingly, the UPF only needs to wait for receiving the packet, and does not need to first complete a handshake process of a connection. For uniform description, in this application, waiting for receiving an application request is also considered as establishing a monitoring interface.

After establishing the monitoring interface for the session, the UPF may wait to receive a request packet. When establishing the monitoring interface, the UPF may use an address of the UPF, or use an address corresponding to the terminal (an address allocated by the UPF or a control plane network element to the terminal in a session establishment process).

Step 2: The UPF reports, to an address server, address information corresponding to the application. The address server may be the control plane network element, or may be a device in the DN. In FIG. 7, the DN is used as an example for description. The address information corresponding to the application includes the application address information and the address used for establishing the monitoring interface in step 1. An application address may be obtained in step 0, or may be configured on the UPF (for example, an address corresponding to DNN/S-NSSAI).

Step 3: When the application client of the external device is ready to initiate the application request, optionally, the application client queries the address server for an address of the terminal corresponding to the application address (that is, the address used when the UPF establishes the monitoring interface in step 1). When the application client of the external device already has the address information, or when an ICN network or the client and the UPF can access the application, the application client of the external device does not need to perform this step.

Step 4: When a connection needs to be established, the application client of the external device initiates a connection establishment request between the application client and the UPF based on the address information obtained in step 3.

Step 5: The UPF may report a session or flow establishment request to the control plane network element (for example, an SMF), to trigger a procedure of establishing a flow establishment procedure by a control plane. Alternatively, the flow may be established before step 2. Optionally, when the UPF establishes the monitoring interface in step 2, or detects the connection establishment in step 4, or receives the application request in step 6, this step may be performed after step 2 or 6.

Step 6: The application client of the external device sends the application request to the UPF. The application client of the external device may send the application request through the connection established in step 4, or send the application request to the address obtained in step 3. Alternatively, when the ICN network or the application client of the external device and the UPF can directly access the application, the application request may be directly sent.

Step 7: The UPF sends the application request through the session corresponding to the application/interface.

Step 8: The UPF receives an application response from the UE.

Step 9: The UPF directly sends the application response to the application client of the external device.

In this application, a protocol stack for application packet transmission does not need to be deployed in the terminal, and the UPF provides a TCP or IP connection between the terminal and the external device, so that device overheads of the terminal can be reduced, and complexity of terminal processing can be reduced.

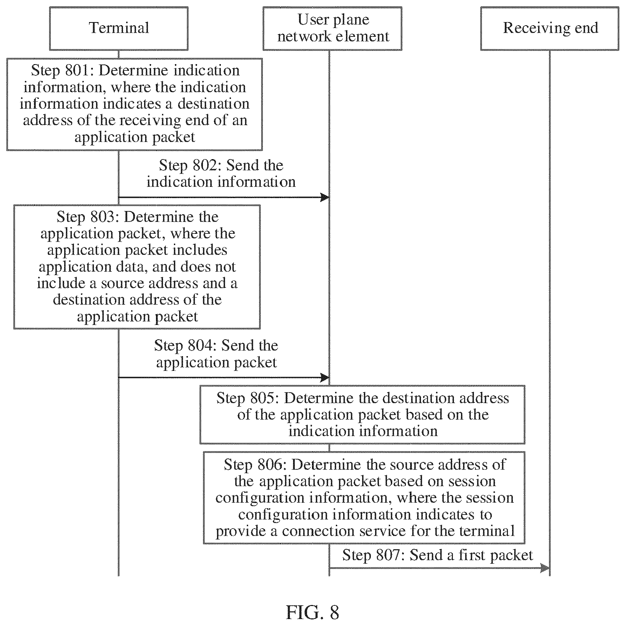

When a communication connection between UE and a receiving end is established by using the solution in FIG. 6 or FIG. 7, a user plane network element may obtain connection information by parsing a software application of a terminal device or through session configuration information. However, if the software application of the terminal device is a private application, the user plane network element cannot obtain the connection information when the user plane network element cannot sense application-related information. In this case, a communication method provided in this application may be performed with reference to FIG. 8, and interaction between the terminal, the user plane network element, and the receiving end may be used for description. The method may be performed as below.

Step 801: The terminal determines indication information, where the indication information indicates a destination address of a receiving end of an application packet.

It should be noted that the indication information may be sent by the terminal to the user plane network element through a protocol layer between the terminal and the user plane network element. The protocol layer may be a Ctrl layer. A name of the Ctrl layer, a location of the Ctrl layer in a protocol stack, and the like are not limited in this application. For example, the terminal may also support protocol stacks such as a TCP/IP network layer and a transport layer. The Ctrl layer may be located at any location of a wireless protocol stack, the TCP/IP network layer, the transport layer, an application layer, and the like. In this embodiment, an example in which the Ctrl layer is used for information exchange between UE and a UPF is used as an example for description. The Ctrl layer may be used for information exchange between devices in a network, and the network devices may modify content of the Ctrl layer when transferring the Ctrl layer. For example, after the UE sends Ctrl information (that is, indication information) to the UPF, the UPF may send the Ctrl layer information to a device in a DN, and before sending the Ctrl layer information, the UPF may further modify content. In this manner, a function of another existing protocol layer is not affected. This is not specifically limited in this application. The indication information is sent through the protocol layer, and the indication information indicates an address of the receiving end of the application packet, so that the user plane network element may obtain the connection information when the user plane network element cannot sense the application-related information.

Step 802: The terminal sends the indication information to the user plane network element; and correspondingly, the user plane network element receives the indication information.

Step 803: The terminal determines the application packet, where the application packet includes application data, and does not include a source address and the destination address of the application packet.

Step 804: The terminal sends the application packet to the user plane network element. Correspondingly, the user plane network element receives the application packet.

It should be noted that the terminal may send the application packet through a wireless communication protocol, and the terminal may also support a TCP/IP protocol stack. This is not specifically limited in this application.

Step 805: The user plane network element determines the destination address of the application packet based on the indication information.

Step 806: The user plane network element determines the source address of the application packet based on the session configuration information, where the session configuration information indicates to provide a connection service for the terminal. For details, refer to the foregoing descriptions in step 503. Details are not described herein in this application.

Step 807: The user plane network element sends a first packet to the receiving end, where the first packet includes the application data, the source address of the application packet, and the destination address of the application packet.

The indication information further includes at least one of QoS requirement information corresponding to the terminal device, protocol information for transmitting the application packet, and a protocol type corresponding to the application packet. The packet protocol information may be HTTP. It should be noted that the indication information includes the QoS requirement information corresponding to the terminal device, the protocol information for transmitting the application packet, and the protocol type corresponding to the application packet, so that the user plane network element can better determine the connection information to improve data processing efficiency.

In this application, when the terminal communicates with another device, the user plane network element may establish a communication connection for an application packet to the another device through the session configuration information and the indication information. In addition, in this manner, when the user plane network element cannot sense information related to the private application of the terminal, the user plane network element may also obtain the destination address of the receiving end of the application packet through the indication information, so that cases in which the destination address of the receiving end is determined based on an application address of the application packet can be reduced.

In an optional manner, the indication information specifically indicates to determine the destination address of the receiving end based on a connection identifier carried in the application packet. The terminal sends the application packet to the user plane network element, where the application packet includes a first connection identifier, and a connection corresponding to the first connection identifier is used to carry the application packet. Correspondingly, the user plane network element receives the application packet from the terminal, where the application packet includes the first connection identifier; and the user plane network element determines the destination address of the application packet based on the first connection identifier included in the application packet. The connection identifier may be a connection identifier determined by the terminal, or may be a connection identifier obtained in another manner. The user plane network element may determine the destination address of the receiving end of the application packet based on the connection identifier. In this manner, communication efficiency can be improved, and complexity of device processing can be reduced.

In an optional manner, the user plane network element sends connection identifier information to the terminal, where the connection identifier information includes one or more connection identifiers, and each connection identifier identifies a connection established by the user plane network element. The first connection identifier is selected by the terminal from the one or more connection identifiers. Correspondingly, the user plane network element receives the connection identifier information from the terminal. In this manner, the connection identifier of the application packet is allocated by the user plane network element. After the user plane network element allocates the connection identifier, the terminal includes the selected connection identifier in the application data when sending the application data, so that the user plane network element can determine the connection information. This improves the data processing efficiency.

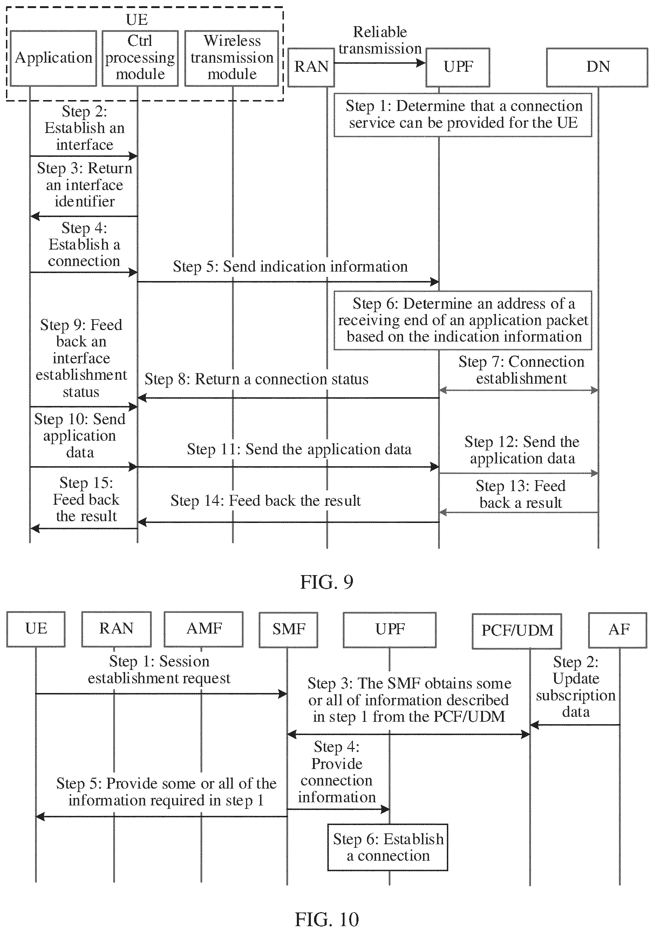

FIG. 9 shows a procedure in which a user plane network element determines connection information based on indication information. UE may include an application, a Ctrl processing module, and a wireless sending module. Data sending between the UE and a UPF is implemented through a RAN, and reliable sending of data between the RAN and the UPF is ensured through GTP-U. Details are not described herein. For understanding, refer to the following descriptions. The following may be performed.

Step 1: In a session (or flow) establishment (or modification) process, a control plane network element (SMF) indicates, through session establishment (or modification) information, the UPF to provide a connection service (or support a Ctrl protocol). Alternatively, the UPF determines, based on information such as a session type and DNN/S-NSSAI, that a connection service needs to be provided for a user (or a Ctrl protocol needs to be supported), and in this case, the UPF determines that the connection service can be provided.

Step 2: The application of the UE requests to establish an interface. An existing TCP/IP protocol stack interface may be used to request to establish the interface. This is not limited in this application.

Step 3: The Ctrl processing module establishes the interface for the application, and returns an interface identifier.

Step 4: When the UE functions as an application client, the UE requests to establish a connection. In FIG. 9, an example in which the UE is used as the client is used for description. If the UE is used as a service end, the UE requests to monitor a packet. Details are not described in this embodiment.

Step 5: The Ctrl processing module sends indication information through a Ctrl layer, for example, sends a control indication to request to establish a connection. This step may alternatively be performed while a terminal sends an application packet (in other words, steps 9 and 10 are performed after step 4, steps 5 and 11 are combined, and steps 8 and 13 are combined). The indication information may include an application layer address, a service end address, and sending protocol-related information (for example, a protocol type and a port number), and is used to provide information required by the UPF to provide the connection service. The indication information may further include a QoS requirement (for example, information such as bandwidth and a packet periodicity/burst traffic) corresponding to the application, details of whether reliable sending is supported, and the like, and is used by the UPF and a wireless network, and optionally, a DN network to provide requested QoS guarantee.

In an implementation, a conventional TCP/IP protocol stack interface is used between the application and the Ctrl processing module. Then, the Ctrl processing module encapsulates, at the Ctrl layer, the TCP/IP protocol stack interface invoked by the application and a related parameter. This is similar to implementing the TCP/IP protocol stack on the UPF, and a protocol stack service invoked by the application is implemented on the UPF. Specific implementation of the Ctrl module and information format of the Ctrl layer are not limited in this application.

Step 6: The UPF determines an address of a receiving end of the application packet based on the indication information provided by the Ctrl layer.

The UPF records a correspondence between a network-side connection and a session. The user subsequently forwards a packet between the connection and the session. Optionally, the UPF allocates a connection identifier to the session. The identifier corresponds to the connection. When a packet is subsequently exchanged between the session and the UPF, the identifier indicates the corresponding connection.

Step 7: The UPF completes a process of establishing a connection to a receiving end device.

Step 8: The UPF feeds back a connection status or performs a Ctrl indication result through the Ctrl layer, and optionally, feeds back the connection identifier allocated in step 6.

Step 9: The Ctrl processing module feeds back an interface establishment result to the application based on the result in step 8.

Step 10: When the application needs to send data, the application sends the data through the Ctrl processing module.

In an implementation, the application may send data through the conventional TCP/IP protocol stack interface, and the Ctrl module performs adaptation based on a processing logic of the interface.

Step 11: The Ctrl processing module forwards the data from the application, where the data may include the connection identifier fed back in step 8 when being sent.

Step 12: The UPF sends the application data to the receiving end device through the application packet or the connection corresponding to the connection identifier.

Step 13: The receiving end may feed back an execution result to the UPF.

Step 14: Optionally, the UPF sends, through the Ctrl layer, the execution result in step 13 to the session corresponding to the connection, and when receiving a downlink packet from the receiving end device, the UPF sends the received packet to the terminal through the session corresponding to the connection. The execution result in step 13 may be sent together with the downlink packet. When the process is performed, optionally, the connection identifier is carried at the Ctrl layer.

Step 15: The Ctrl processing module feeds back an execution result in step 11 to the application. The step may be determining the execution result based on information fed back in step 13 (for example, for an application that has a reliable sending requirement, the Ctrl processing module determines, based on the information fed back in step 13, whether the packet is successfully sent), or feeding back the execution result after step 11 or 12 is performed (for example, for an application that does not have the reliable sending requirement, provided that the packet is sent, the sending is considered successful).

It is mentioned in all foregoing examples that a UPF is enabled to provide a connection service, reliable sending, QoS guarantee, and the like for a user, and obtain, in a manner of receiving configuration, related information required for providing the foregoing services. This embodiment provides a specific enabling process and a process of obtaining the related configuration. Refer to FIG. 10. The following steps are performed.

The following steps 1, 2, and 3 are optionally performed. When the related configuration is performed on the UPF, some or all of steps 1, 2, and 3 may be performed, so that an SMF obtains, from one or more of the steps, related information subsequently configured on the UPF.

Step 1: In a session establishment request sent by UE, optionally, indicate a network to provide a connection service (for example, a special session type is used, or displayed indication information is used, or a network corresponding to indicated information such as DNN/S-NSSAI needs to provide a connection service), indicate connection-related information (session configuration information), and indicate reliable sending and/or a Ctrl protocol layer (the indication is performed in a similar manner to indicating to provide the connection service).

Step 2: An AF updates subscription data in a UDM, or the AF provides some or all of the information described in step 1 for a PCF (the information may be sent by the AF to a network element like a NEF and then sent to the PCF, or the information may be directly sent by the AF to the PCF).

Step 3: The SMF obtains some or all of the information described in step 1 from the PCF or the UDM. Alternatively, step 2 may not be performed, and the AF provides the information for the SMF (the information is directly sent by the AF to the SMF, or the information is sent by the AF to a network element like the NEF, and then is sent to the SMF).

Step 4: The SMF provides connection information for the UPF through an N4 session establishment (or modification) request.

Step 5: In a session establishment process or a flow establishment process, or during update to URSP information, the SMF provides some or all of the information described in step 1 for a terminal (for example, through steps 2 and 3, the AF updates application-related information, and then sends the updated information to the UE through a URSP, to update the configuration on the UE), so that the terminal performs related procedures in FIG. 5 to FIG. 9 based on configuration information. Alternatively, the SMF provides related information to a network through step 1 in FIG. 6 during subsequent session establishment.

Step 6: Perform the procedures in FIG. 6, FIG. 7, or FIG. 9, or establish a connection based on the connection information in step 4.

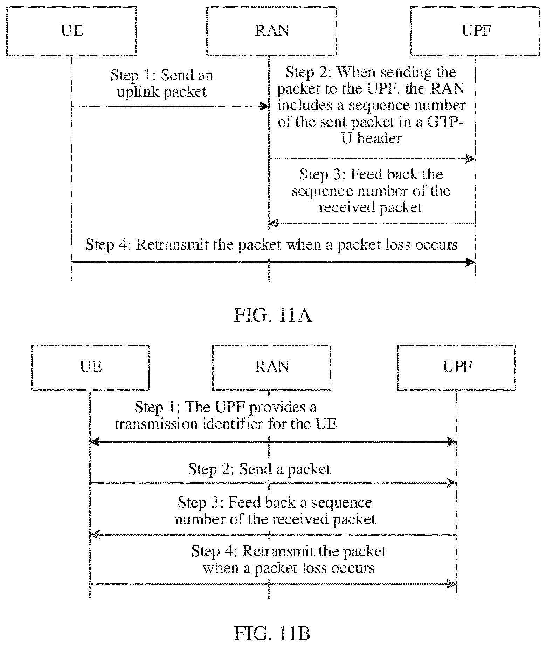

Data sending between UE and a UPF in FIG. 5 to FIG. 10 is implemented through a RAN. A user plane network element may receive a forwarded packet from a radio access network (RAN) device. The forwarded packet is sent by a terminal to the radio access network device, and the forwarded packet includes an application packet. Reliable sending of data between the RAN and the UPF is ensured through GTP-U. The following specifically describes how to ensure reliable sending of the data. The application packet carried in a session between the user plane network element and the terminal device is forwarded through the RAN. For an uplink packet, the user plane network element receives the forwarded packet from the RAN, and the forwarded packet includes the application packet and a sequence number of the sent application packet. The user plane network element feeds back the sequence number of the received application packet to the RAN. In actual execution, there may be two manners including RAN transparent transmission and forwarding. When the RAN forwarding is used, refer to FIG. 11A for description. An uplink data flow is used as an example for description. Specifically, the following may be performed.

Step 1: The UE sends the uplink packet, where reliable sending between the UE and the RAN is ensured through an air interface mechanism.

Step 2: When sending the packet to the UPF, the RAN includes a sequence number of the sent packet in a GTP-U packet header. The sequence number may be numbered at a flow granularity (in other words, flows are independently numbered in sequence), or may be numbered at a GTP-U tunnel granularity (in other words, GTP-U tunnels are independently numbered in sequence, and the sequence number may be considered as a sequence number at a session granularity). Alternatively, GTP-U may be carried on a reliable sending protocol (for example, TCP or QUIC, and in a conventional technology, the GTP-U is carried on a UDP). Based on this, reliable sending at a device granularity between the RAN and the UPF can also be implemented.

Step 3: The UPF feeds back the sequence number of the received packet to the RAN, or when the packet has not been received when a timeout occurs, feeds back the sequence number of the packet that has not been received when the timeout occurs.

Step 4: When a packet loss occurs in step 2, the RAN determines, based on the feedback in step 3, that the packet loss occurs and the sequence number of the lost packet, and performs retransmission.

When the RAN transparent transmission is used, refer to FIG. 11B for description, and an uplink data flow may be used as an example for description. Specifically, the following may be performed.

Step 1: Before the UE sends the uplink flow (for example, in a flow establishment process, after flow establishment, or in a connection establishment process), the UPF provides the UE with a sending identifier corresponding to a session (in other words, the UPF allocates the identifier), where the identifier may be a connection identifier at a Ctrl layer, or may be an independent identifier used for reliable sending. The identifier may be used to subsequently identify a reliably sent flow (which may mean that a subsequent sequence number is at a sending identifier granularity). Alternatively, the UE may allocate the sending identifier, for example, the UE sends the sending identifier to the UPF, or the UE sends the sending identifier together with a packet when sending the packet at the beginning.

Step 2: The UE sends an uplink packet, where the packet includes a packet sequence number of a QoS session at the sending identifier granularity, and the sequence number may be at an independent protocol layer (in this application, an RT protocol layer is used as an example for description, but a specific protocol layer name is not limited), or may be at the Ctrl layer, or may be in another header. If the sending identifier exists, the packet may further include the sending identifier. The sending identifier is not limited to being at a same protocol layer as the packet sequence number. For example, the sending sequence number is a connection identifier of the Ctrl layer, and the sequence number is set at the RT protocol layer. This is not limited herein.

Step 3: The UPF feeds back the sequence number of the received packet to the UE, or when the packet is not received when a timeout occurs, feeds back the sequence number of the lost packet. The sequence number that is of the packet and is fed back may be sent together with a downlink packet.

Step 4: When a packet loss occurs in step 2, the terminal determines, based on the feedback in step 3, that the packet loss occurs and the sequence number of the lost packet, and performs retransmission.

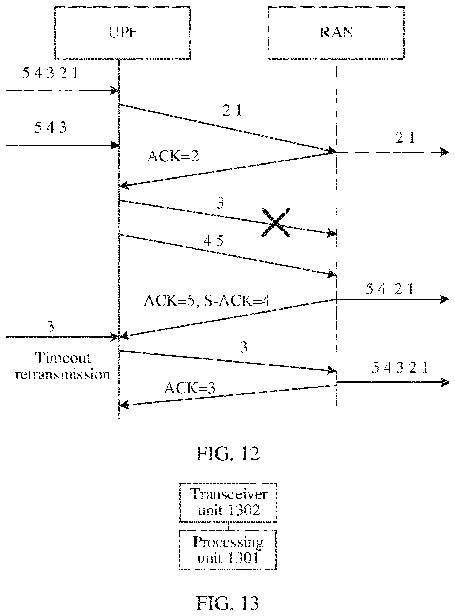

In addition, for details of how to send a packet and retransmit a lost packet between the UPF and the RAN, refer to FIG. 12. An example in which the RAN sends a packet to the UPF, the UPF correspondingly sends an acknowledgment for the received packet to the RAN, and GTP-U implements reliable sending is used.

A mechanism for packet retransmission control may be introduced into the GTP-U header. For example, control at a session granularity is used as an example. In FIG. 12, an ACK sequence number is introduced into the GTP-U header, to implement packet reception acknowledgment, and a sequence number in an existing GTP-U header is reused as the sequence number of the packet to be sent. If selective retransmission is supported, an S-ACK sequence number may be introduced for implementation. An S-ACK and an ACK are used together to acknowledge that a packet with a sequence number in an interval is received, where the S-ACK represents a start sequence number of the interval, and the ACK represents a last sequence number of the interval. If the selective retransmission is not supported, retransmission in a window mechanism may be implemented through the sequence number and the ACK (which is not described in detail herein).

When a receiving end of an acknowledgement packet (that is, the RAN) determines that the received packet includes the ACK sequence number, if the received packet does not include the S-ACK sequence number, all packets before the ACK sequence number have been received, and a cache may be deleted (for example, in FIG. 12, when the RAN receives packets 1 and 2, a returned ACK is a sequence number 2). If the S-ACK sequence number is included, a frame between the S-ACK and the ACK can be deleted (as shown in the figure, after the RAN receives packets 4 and 5, a returned S-ACK is 4 and a returned ACK is 5). If there are sequence numbers that have not been acknowledged when a timeout occurs (for example, a packet 3 in the figure), packets corresponding to these sequence numbers are retransmitted.

In this application, retransmission control at a larger granularity can be supported. For example, related numbers are uniformly numbered at a device granularity, so that retransmission control at the device granularity can be implemented. In a bidirectional communication process, an ACK may be sent together with a data packet. When no data packet is to be sent, ACK information may be sent through an independent packet. In this case, a sequence number in a packet for sending the ACK also needs to be increased. However, when receiving the ACK packet, a peer end does not separately send an ACK response, to avoid cyclic sending of the ACK.

The foregoing mainly describes the solutions provided in embodiments of this application from the perspective of device interaction. It may be understood that, to implement the foregoing functions, each device may include a corresponding hardware structure and/or software module for performing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

When the integrated unit is used, FIG. 13 is a block diagram of a possible example of a communication apparatus according to an embodiment of this application. As shown in FIG. 13, the communication apparatus may include a processing unit 1301 and a transceiver unit 1302. The processing unit 1301 is configured to control and manage an action of the communication apparatus. The transceiver unit 1302 is configured to support communication between the communication apparatus and another device. Optionally, the transceiver unit 1302 may include a receiving unit and/or a sending unit, configured to respectively perform a receiving operation and a sending operation. Optionally, the communication apparatus may further include a storage unit, configured to store program code and/or data of the communication apparatus. The transceiver unit may be referred to as an input/output unit, a communication unit, or the like. The transceiver unit may be a transceiver. The processing unit may be a processor. When the communication apparatus is a module (for example, a chip) in a communication device, the transceiver unit may be an input/output interface, an input/output circuit, an input/output pin, or the like, or may be referred to as an interface, a communication interface, an interface circuit, or the like. The processing unit may be a processor, a processing circuit, a logic circuit, or the like. Specifically, the apparatus may be the foregoing terminal, the foregoing user plane network element, or the like.

In an embodiment, the transceiver unit 1302 may be configured to receive an application packet from a terminal, where the application packet includes application data and an application address of a receiving end of the application packet, and the application packet is carried in a session or a flow. The processing unit 1301 may be configured to: determine a source address of the application packet based on session configuration information, where the session configuration information indicates to provide a connection service for the terminal; and determine a destination address of the application packet based on the application address. The transceiver unit 1302 may be further configured to send a first packet to the receiving end, where the first packet includes the application data, the source address of the application packet, and the destination address of the application packet.

In an optional manner, the processing unit 1301 may be configured to: determine a source address of the session based on the session configuration information; and use the source address of the session as the source address of the application packet.

In an optional manner, the transceiver unit 1302 may be configured to: send a connection establishment request, where the establishment request includes the application address, and the establishment request is used to request the destination address corresponding to the application address; and receive response information of the connection establishment request, where the response information includes the destination address corresponding to the application address.

In an optional manner, the transceiver unit 1302 may be configured to receive a forwarded packet from a radio access network device, where the forwarded packet is sent by the terminal to the radio access network device, and the forwarded packet includes the application packet.

In an optional manner, the forwarded packet further includes a sequence number of the application packet; and the transceiver unit 1302 may be configured to feed back the sequence number of the received application packet to the access network device.

In an optional manner, the session configuration information includes packet protocol information; and the packet protocol information is: packet protocol information for transmitting the application packet, and/or a packet protocol type corresponding to the application packet.

In an optional manner, the packet protocol information is HTTP.

In an optional manner, the source address is an address allocated by the user plane network element to the terminal.

In another embodiment, the processing unit 1301 may be configured to determine an application packet, where the application packet includes application data and an application address of a receiving end of the application packet, and does not include a source address of the application packet; and the transceiver unit 1302 may be configured to send the application packet to a user plane network element.

In still another embodiment, the transceiver unit 1302 may be configured to: receive indication information from a terminal, where the indication information indicates a destination address of a receiving end of an application packet; and receive the application packet from the terminal, where the application packet includes application data. The processing unit 1301 may be configured to: determine a destination address of the application packet based on the indication information; and determine a source address of the application packet based on session configuration information, where the session configuration information indicates to provide a connection service for the terminal. The transceiver unit 1302 may be further configured to send a first packet to the receiving end, where the first packet includes the application data, the source address of the application packet, and the destination address of the application packet.

In an optional manner, the indication information is sent by the terminal to a user plane network element through a protocol layer between the terminal and the user plane network element.

In an optional manner, the processing unit 1301 may be configured to: determine, based on the session configuration information, a source address of a session carried in the application packet; and use the source address of the session carried in the application packet as the source address of the application packet.

In an optional manner, the indication information specifically indicates to determine the destination address of the receiving end based on a connection identifier carried in the application packet. The transceiver unit 1302 is configured to receive the application packet from the terminal, where the application packet includes a first connection identifier, and a connection corresponding to the first connection identifier is used to carry the application packet. The processing unit 1301 is configured to determine the destination address of the application packet based on the first connection identifier included in the application packet.

In an optional manner, the transceiver unit 1302 is configured to send connection identifier information to the terminal, where the connection identifier information includes one or more connection identifiers, each connection identifier identifies a connection established by the user plane network element, and the first connection identifier is selected by the terminal from the one or more connection identifiers.

In an optional manner, the transceiver unit 1302 may be configured to receive a forwarded packet from a radio access network device, where the forwarded packet is sent by the terminal to the radio access network device, and the forwarded packet includes the application packet.

In an optional manner, the forwarded packet further includes a sequence number of the application packet; and the transceiver unit 1302 may be configured to feed back the sequence number of the received application packet to the access network device.

In an optional manner, the indication information includes QoS requirement information corresponding to the terminal, packet protocol information for transmitting the application packet, and a packet protocol type corresponding to the application packet.

In an optional manner, the packet protocol information is HTTP.

In still another embodiment, the processing unit 1301 may be configured to determine indication information, where the indication information indicates a destination address of a receiving end of an application packet. The transceiver unit 1302 may be configured to send the indication information to a user plane network element. The processing unit 1301 may be configured to determine the application packet, where the application packet includes application data, and does not include a source address and a destination address of the application packet. The transceiver unit 1302 may be configured to send the application packet to the user plane network element, where the application packet includes the application data, and does not include the source address and the destination address of the application packet.

In an optional manner, the indication information is sent by the terminal to the user plane network element through a protocol layer between the terminal and the user plane network element.

In an optional manner, the indication information specifically indicates the user plane network element to determine the destination address of the receiving end based on a connection identifier carried in the application packet. The transceiver unit 1302 is configured to send the application packet to the user plane network element, where the application packet includes a first connection identifier, and a connection corresponding to the first connection identifier is used to carry the application packet.

In an optional manner, the transceiver unit 1302 is configured to receive connection identifier information from the user plane network element, where the connection identifier information includes one or more connection identifiers, each connection identifier identifies a connection established by the user plane network element, and the first connection identifier is selected by the terminal from the one or more connection identifiers.

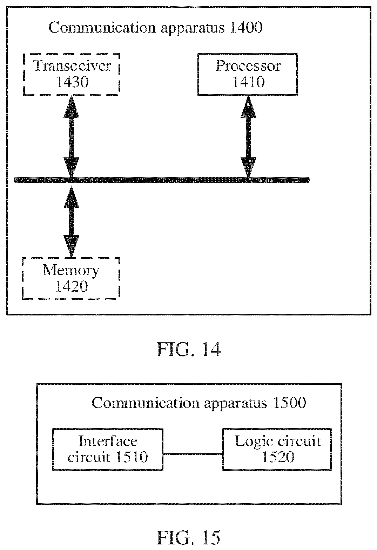

In addition, as shown in FIG. 14, a communication apparatus 1400 is further provided in this application. For example, the communication apparatus 1400 may be a chip or a chip system. Optionally, in this embodiment of this application, the chip system may include a chip, or may include the chip and another discrete component.

The communication apparatus 1400 may include at least one processor 1410. The communication apparatus 1400 may further include at least one memory 1420 that is configured to store a computer program, program instructions, and/or data. The memory 1420 is coupled to the processor 1410. The coupling in this embodiment of this application may be an indirect coupling or a communication connection between apparatuses, units, or modules in an electrical form, a mechanical form, or another form, and is used for information exchange between the apparatuses, the units, or the modules. The processor 1410 may cooperate with the memory 1420. The processor 1410 may execute the computer program stored in the memory 1420. Optionally, the at least one memory 1420 may alternatively be integrated with the processor 1410.

Optionally, in actual application, the communication apparatus 1400 may include a transceiver 1430 or may not include the transceiver 1430. A dashed box is used as an example in the figure. The communication apparatus 1400 may exchange information with another device through the transceiver 1430. The transceiver 1430 may be a circuit, a bus, a transceiver, or any other apparatus that can be configured to exchange information.

In a possible implementation, the communication apparatus 1400 may be applied to the foregoing terminal device, or may be the foregoing user plane network element. The memory 1420 stores a computer program, program instructions, and/or data that are necessary for implementing a function of the user plane network element in any one of the foregoing embodiments. The processor 1410 may execute the computer program stored in the memory 1420, to complete the method in any one of the foregoing embodiments.

A specific connection medium between the transceiver 1430, the processor 1410, and the memory 1420 is not limited in this embodiment of this application. In this embodiment of this application, the memory 1420, the processor 1410, and the transceiver 1430 are connected through a bus in FIG. 14. The bus is represented by using a bold line in FIG. 14. A manner of connection between other components is merely an example for description, and is not limited thereto. The bus may be classified into an address bus, a data bus, a control bus, and the like. For ease of representation, only one bold line is used to represent the bus in FIG. 14, but this does not mean that there is only one bus or only one type of bus. In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to this embodiment of this application may be directly performed by a hardware processor, or may be performed by using a combination of hardware in the processor and a software module.

In this embodiment of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of instructions or a data structure and that can be accessed by a computer, but is not limited thereto. Alternatively, the memory in this embodiment of this application may be a circuit or any other apparatus that can implement a storage function, and is configured to store a computer program, program instructions, and/or data.

Based on the foregoing embodiments, refer to FIG. 15. An embodiment of this application further provides another communication apparatus 1500, including an interface circuit 1510 and a logic circuit 1520. The interface circuit 1510 may be understood as an input/output interface, and may be configured to perform operation steps same as operation steps of a transceiver unit shown in FIG. 13 or a transceiver shown in FIG. 14. Details are not described herein again in this application. The logic circuit 1520 may be configured to run code instructions to perform the method in any one of the foregoing embodiments, and may be understood as a processing unit in FIG. 13 or a processor in FIG. 14, and may implement a same function as the processing unit or the processor. Details are not described herein again in this application.

Based on the foregoing embodiments, an embodiment of this application further provides a readable storage medium. The readable storage medium stores instructions. When the instructions are executed, the method performed in the communication method in any one of the foregoing embodiments is enabled to be implemented. The readable storage medium may include any medium that can store program code, for example, a USB flash drive, a removable hard disk, a read-only memory, a random access memory, a magnetic disk, or an optical disc.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the apparatus (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing apparatus to generate a machine, so that the instructions executed by a computer or the processor of any other programmable data processing apparatus generate an apparatus for implementing a specific function in one or more procedures in the flowcharts and/or in one or more blocks in the block diagrams.

These computer program instructions may be alternatively stored in a computer-readable memory that can indicate the computer or another programmable data processing apparatus to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more procedures in the flowcharts and/or in one or more blocks in the block diagrams.

## Claims

1. A communication method, comprising:
receiving (502), by a user plane network element, an application packet from a terminal, wherein the application packet comprises application data and an application address of a receiving end of the application packet, and the application packet is carried in a session or a flow;
determining (503), by the user plane network element, a source address of the application packet based on session configuration information, wherein the session configuration information indicates to provide a connection service for the terminal;
determining (504), by the user plane network element, a destination address of the application packet based on the application address; and
sending (505), by the user plane network element, a first packet to the receiving end, wherein the first packet comprises the application data, the source address of the application packet, and the destination address of the application packet;
wherein the receiving (502), by a user plane network element, an application packet from a terminal comprises:
receiving, by the user plane network element, a forwarded packet from a radio access network device, wherein the forwarded packet is sent by the terminal to the radio access network device, and the forwarded packet comprises the application packet;
wherein the forwarded packet further comprises a sequence number of the application packet; and the method further comprises:
sending, by the user plane network element, the sequence number of the received application packet to the radio access network device such that the radio access network device may determine whether the received application packet was successfully received by the user plane network element;
wherein the determining (503), by the user plane network element, a source address of the application packet based on session configuration information comprises:
determining, by the user plane network element, a source address of the session based on the session configuration information; and
using, by the user plane network element, the source address of the session as the source address of the application packet; and
wherein the determining (504), by the user plane network element, a destination address of the application packet based on the application address comprises:
sending, by the user plane network element, a connection establishment request, wherein the establishment request comprises the application address, and the establishment request is used to request the destination address corresponding to the application address; and
receiving, by the user plane network element, response information of the connection establishment request, wherein the response information comprises the destination address corresponding to the application address.

2. The method according to claim **1,** wherein the session configuration information comprises packet protocol information; and the packet protocol information is: packet protocol information for transmitting the application packet, and/or a packet protocol type corresponding to the application packet.

3. The method according to claim 2, wherein the packet protocol information is a hypertext transfer protocol HTTP.

4. A communication apparatus, comprising a functional module for implementing the method according to any one of claims 1 to 3.

5. A chip system, wherein the chip system comprises a processing circuit, and the processing circuit is coupled to a storage medium; and
the processing circuit is configured to execute some or all computer programs or instructions in the storage medium, and when the some or all computer programs or instructions are executed, the processing circuit is configured to implement the method according to any one of claims 1 to 3.

6. A computer-readable storage medium, wherein the computer-readable storage medium stores instructions, and when the instructions are executed by a computer, the method according to any one of claims 1 to 3 is enabled to be performed.

## Patentansprüche

1. Kommunikationsverfahren, das umfasst:
Empfangen (502), durch ein Benutzerebenennetzwerkelement, eines Anwendungspakets von einem Endgerät, wobei das Anwendungspaket Anwendungsdaten und eine Anwendungsadresse eines Empfangsendes des Anwendungspakets umfasst und das Anwendungspaket in einer Sitzung oder einem Fluss übertragen wird;
Bestimmen (503), durch das Benutzerebenennetzwerkelement, einer Quelladresse des Anwendungspakets basierend auf Sitzungskonfigurationsinformationen, wobei die Sitzungskonfigurationsinformationen angeben, einen Verbindungsdienst für das Endgerät bereitzustellen;
Bestimmen (504), durch das Benutzerebenennetzwerkelement, einer Zieladresse des Anwendungspakets basierend auf der Anwendungsadresse; und
Senden (505), durch das Benutzerebenennetzwerkelement, eines ersten Pakets an das Empfangsende, wobei das erste Paket die Anwendungsdaten, die Quelladresse des Anwendungspakets und die Zieladresse des Anwendungspakets umfasst;
wobei das Empfangen (502), durch ein Benutzerebenennetzwerkelement, eines Anwendungspakets von einem Endgerät umfasst:
Empfangen, durch das Benutzerebenennetzwerkelement, eines weitergeleiteten Pakets von einer Funkzugangsnetzwerkvorrichtung, wobei das weitergeleitete Paket durch das Endgerät an die Funkzugangsnetzwerkvorrichtung gesendet wird, und das weitergeleitete Paket das Anwendungspaket umfasst;
wobei das weitergeleitete Paket ferner eine Sequenznummer des Anwendungspakets umfasst; und das Verfahren ferner umfasst:
Senden, durch das Benutzerebenennetzwerkelement, der Sequenznummer des empfangenen Anwendungspakets an die Funkzugangsnetzwerkvorrichtung, derart, dass die Funkzugangsnetzwerkvorrichtung bestimmen kann, ob das empfangene Anwendungspaket erfolgreich durch das Benutzerebenennetzwerkelement empfangen wurde;
wobei das Bestimmen (503), durch das Benutzerebenennetzwerkelement, einer Quelladresse des Anwendungspakets basierend auf
Sitzungskonfigurationsinformationen umfasst:
Bestimmen, durch das Benutzerebenennetzwerkelement, einer Quelladresse der Sitzung basierend auf den Sitzungskonfigurationsinformationen; und
Verwenden, durch das Benutzerebenennetzwerkelement, der Quelladresse der Sitzung als die Quelladresse des Anwendungspakets; und
wobei das Bestimmen (504), durch das Benutzerebenennetzwerkelement, einer Zieladresse des Anwendungspakets basierend auf der Anwendungsadresse umfasst:
Senden, durch das Benutzerebenennetzwerkelement, einer Verbindungsaufbauanforderung, wobei die Aufbauanforderung die Anwendungsadresse umfasst, und die Aufbauanforderung verwendet wird, um die Zieladresse, die der Anwendungsadresse entspricht, anzufordern; und
Empfangen, durch das Benutzerebenennetzwerkelement, von Antwortinformationen der Verbindungsaufbauanforderung, wobei die Antwortinformationen die Zieladresse, die der Anwendungsadresse entspricht, umfassen.

2. Verfahren nach Anspruch 1, wobei die Sitzungskonfigurationsinformationen Paketprotokollinformationen umfassen; und die Paketprotokollinformationen sind: Paketprotokollinformation zum Übermitteln des Anwendungspakets und/oder ein Paketprotokolltyp, der dem Anwendungspaket entspricht.

3. Verfahren nach Anspruch 2, wobei die Paketprotokollinformation ein Hypertext Transfer Protocol HTTP sind.

4. Kommunikationseinrichtung, die ein Funktionsmodul zum Implementieren des Verfahrens nach einem der Ansprüche 1 bis 3 umfasst.

5. Chipsystem, wobei das Chipsystem eine Verarbeitungsschaltung umfasst, und die Verarbeitungsschaltung mit einem Speichermedium gekoppelt ist; und
die Verarbeitungsschaltung konfiguriert ist, um einige oder alle Computerprogramme oder Anweisungen in dem Speichermedium auszuführen, und wenn die einigen oder alle Computerprogramme oder Anweisungen ausgeführt sind, die Verarbeitungsschaltung konfiguriert ist, um das Verfahren nach einem der Ansprüche 1 bis 3 zu implementieren.

6. Computerlesbares Speichermedium, wobei das computerlesbare Speichermedium Anweisungen speichert und, wenn die Anweisungen durch einen Computer ausgeführt werden, das Verfahren nach einem der Ansprüche 1 bis 3 aktiviert wird, um durchgeführt zu werden.

## Revendications

1. Procédé de communication, comprenant :
la réception (502), par un élément de réseau de plan utilisateur, d'un paquet d'application en provenance d'un terminal, dans lequel le paquet d'application comprend des données d'application et une adresse d'application d'une extrémité de réception du paquet d'application, et le paquet d'application est transporté dans une session ou un flux ;
la détermination (503), par l'élément de réseau de plan utilisateur, d'une adresse source du paquet d'application sur la base d'informations de configuration de session, dans lequel les informations de configuration de session indiquent de fournir un service de connexion pour le terminal ;
la détermination (504), par l'élément de réseau de plan utilisateur, d'une adresse de destination du paquet d'application sur la base de l'adresse d'application ; et
l'envoi (505), par l'élément de réseau de plan utilisateur, d'un premier paquet à l'extrémité de réception, dans lequel le premier paquet comprend les données d'application, l'adresse source du paquet d'application et l'adresse de destination du paquet d'application ;
dans lequel la réception (502), par un élément de réseau de plan utilisateur, d'un paquet d'application en provenance d'un terminal comprend :
la réception, par l'élément de réseau de plan utilisateur, d'un paquet transféré en provenance d'un dispositif de réseau d'accès radio, dans lequel le paquet transféré est envoyé par le terminal au dispositif de réseau d'accès radio, et le paquet transféré comprend le paquet d'application ;
dans lequel le paquet transféré comprend en outre un numéro de séquence du paquet d'application ; et le procédé comprend en outre :
l'envoi, par l'élément de réseau de plan utilisateur, du numéro de séquence du paquet d'application reçu au dispositif de réseau d'accès radio, de sorte que le dispositif de réseau d'accès radio peut déterminer si le paquet d'application reçu a été reçu avec succès par l'élément de réseau de plan utilisateur ;
dans lequel la détermination (503), par l'élément de réseau de plan utilisateur, d'une adresse source du paquet d'application sur la base d'informations de configuration de session comprend :
la détermination, par l'élément de réseau de plan utilisateur, d'une adresse source de la session sur la base des informations de configuration de session ; et
l'utilisation, par l'élément de réseau de plan utilisateur, de l'adresse source de la session en tant qu'adresse source du paquet d'application ; et
dans lequel la détermination (504), par l'élément de réseau de plan utilisateur, d'une adresse de destination du paquet d'application sur la base de l'adresse d'application comprend :
l'envoi, par l'élément de réseau de plan utilisateur, d'une demande d'établissement de connexion, dans lequel la demande d'établissement comprend l'adresse d'application, et la demande d'établissement est utilisée pour demander l'adresse de destination correspondant à l'adresse d'application ; et
la réception, par l'élément de réseau de plan utilisateur, d'informations de réponse de la demande d'établissement de connexion, dans lequel les informations de réponse comprennent l'adresse de destination correspondant à l'adresse d'application.

2. Procédé selon la revendication 1, dans lequel les informations de configuration de session comprennent des informations de protocole de paquet ; et les informations de protocole de paquet sont : des informations de protocole de paquet pour une transmission du paquet d'application, et/ou un type de protocole de paquet correspondant au paquet d'application.

3. Procédé selon la revendication 2, dans lequel les informations de protocole de paquet sont un protocole de transfert hypertexte HTTP.

4. Appareil de communication, comprenant un module fonctionnel pour une mise en œuvre du procédé selon l'une quelconque des revendications 1 à 3.

5. Système de puce, dans lequel le système de puce comprend un circuit de traitement, et le circuit de traitement est couplé à un support de stockage ; et
le circuit de traitement est configuré pour exécuter tout ou partie de programmes informatiques ou d'instructions dans le support de stockage, et lorsque tout ou partie des programmes informatiques ou des instructions sont exécutés, le circuit de traitement est configuré pour mettre en œuvre le procédé selon l'une quelconque des revendications 1 à 3.

6. Support de stockage lisible par ordinateur, dans lequel le support de stockage lisible par ordinateur stocke des instructions, et lorsque les instructions sont exécutées par un ordinateur, le procédé selon l'une quelconque des revendications 1 à 3 est capable d'être réalisé.
